# FASCICULE DE BREVET EUROPEEN

(11) **EP 3 582 979 B1**
(45) Date de publication et mention de la délivrance du brevet: **16.12.2020**
(21) Numéro de dépôt: 18707112.1
(22) Date de dépôt: 15.02.2018
(51) Int. Cl.: B60C 23/04, B29D 30/00

(54) **DISPOSITIF DE FIXATION A UNE ENVELOPPE PNEUMATIQUE D'UN ORGANE ELECTRONIQUE**
VORRICHTUNG ZUR BEFESTIGUNG EINES ELEKTRONISCHEN GLIEDS AN EINER REIFENKARKASSE
DEVICE FOR SECURING AN ELECTRONIC MEMBER TO A TYRE CASING

(30) Priorité: 17.02.2017 FR 1770153
(43) Date de publication de la demande: 25.12.2019
(73) Titulaire: Compagnie Générale des Etablissements Michelin, 63000 Clermont-Ferrand (FR)
(72) Inventeur: BARJON, Stéphane, 63040 Clermont-Ferrand Cedex 9 (FR); PALHEIRE, Yann, 63040 Clermont-Ferrand Cedex 9 (FR)
(74) Mandataire: Roussy, Delphine
(86) Numéro de dépôt international: PCT/FR2018/050363
(87) Numéro de publication internationale: WO 2018/150140

(56) Documents cités:
- DE-A1-102014 206 463
- US-A1- 2009 101 257
- US-A1- 2014 352 420

## Description

### Domaine de l'invention

La présente invention concerne un dispositif de fixation sur une enveloppe pneumatique d'un organe électronique concernant des mesures de paramètres de l'enveloppe pneumatique.

### Arrière-plan technologique

Le développement d'organes électroniques intégrés à des ensembles montés, comprenant une enveloppe pneumatique et une roue, s'est accru ces dernières années. En effet ces organes électroniques mesurent des paramètres de l'ensemble monté comme la température ou la pression de gonflage à l'intérieure de la cavité formée par l'enveloppe pneumatique et la jante de roue dans un état monté, gonflé. Ces paramètres sont essentiels à un usage sécuritaire de l'ensemble monté. Désormais, les fonctionnalités offertes par ces organes électroniques augmentent en multipliant le nombre de paramètres pris en compte. La communication avec ces organes électroniques notamment pour la communication des paramètres de l'ensemble monté se fait généralement par le biais d'une transmission radiofréquence vers des dispositifs émetteurs/récepteurs.

Ces nouvelles fonctionnalités permettent le développement de nouveaux services à destination des clients finaux. La qualité des services offerts dépend en grande partie de la qualité des paramètres mesurés et transmis. Naturellement la qualité de la mesure effectuée est fortement liée aux composants structurels et fonctionnels de l'organe électronique. De ce fait, il est essentiel de prendre en compte l'inviolabilité de cet organe électronique pour assurer la qualité des services offerts avec ceux-ci.

Cet organe électronique peut être suffisamment petit pour être intégré dans la structure même d'une enveloppe pneumatique comme par exemple les transpondeurs passifs RFID (acronyme en anglais de *Radio Frequency Identification*). Mais, dans la majorité des cas, ces organes électroniques sont actifs et sont rapportés aux composants de l'ensemble monté par l'intermédiaire d'un dispositif de fixation. De ce fait, l'inviolabilité de l'organe électronique est alors assurée en premier lieu par l'inviolabilité du dispositif de fixation de l'organe électronique en particulier sur l'enveloppe pneumatique.

Le document EP3020577A1 décrit un réceptacle souple enveloppant un organe électronique. L'organe électronique est introduit au sein du réceptacle par l'intermédiaire d'une ouverture sur la semelle du réceptacle qui est fixée sur la paroi de l'enveloppe pneumatique. Ainsi lorsque le réceptacle est en place sur la paroi de l'enveloppe pneumatique, l'organe électronique n'est plus accessible, l'inviolabilité est ainsi assurée. Cependant, des opérations de maintenance sur l'organe électronique peuvent être nécessaires pour changer par exemple la batterie de l'organe électronique ou faire une évolution technique de l'organe électronique. Une ouverture sur la partie non fixée du réceptacle est alors envisagée à l'aide de solutions de type velcro. Mais à ce moment-là l'inviolabilité du dispositif de fixation n'est plus assurée.

D'autres réceptacles sont connus de US2014352420A1 et US2009101257A1.

L'un des objets de l'invention qui va suivre a pour objectif de résoudre les problèmes d'inviolabilité de ces dispositifs de fixation tout en permettant le changement de l'organe électronique du dispositif de fixation et en gardant un compromis avec les autres fonctionnalités du dispositif de fixation telles que, par exemple, l'endurance thermomécanique du dispositif de fixation, l'endurance de l'enveloppe pneumatique et l'efficacité de la communication radiofréquence de l'organe électronique.

Afin de mieux comprendre l'invention, on entend ici par les directions circonférentielle S, axiale A et radiale R, des directions définies par rapport au repère tournant de l'enveloppe pneumatique autour de son axe de rotation naturel. La direction radiale R est la direction s'éloignant perpendiculairement de l'axe de rotation naturel. La direction axiale A est la direction parallèle à l'axe de rotation naturel. Enfin la direction circonférentielle S forme un trièdre direct avec les directions radiale et axiale prédéfinies.

### Description de l'invention

L'invention porte sur un dispositif de fixation à une paroi d'une enveloppe pneumatique d'un organe électronique comprenant une semelle apte à être fixée à la paroi de l'enveloppe pneumatique et une paroi de maintien fermée, liée à la semelle et définissant avec la semelle un volume. Le volume fermé, défini par les surfaces intérieures de la semelle et de la paroi de maintien, est apte à accueillir l'organe électronique. La semelle présente une ouverture par laquelle peut être introduit l'organe électronique de sorte que lorsque la semelle est fixée à la paroi de l'enveloppe pneumatique, l'ouverture est fermée par la paroi de l'enveloppe pneumatique. Ce dispositif de fixation est **caractérisé en ce que** la paroi de maintien est apte à être déchirée pour former au moins une faille permettant l'extraction et l'insertion de l'organe électronique **et en ce que** la paroi de maintien présente sur sa surface externe au moins un dispositif de retenue pour un système de serrage de la paroi de maintien.

Tout d'abord, le dispositif de fixation est défini selon deux configurations distinctes de fonctionnement. Dans la première configuration, la paroi de maintien reste fermée, c'est-à-dire sans faille. Dans cet état, l'inviolabilité du dispositif de fixation contenant l'organe électronique est assurée lorsque ce dispositif est mis en place sur une enveloppe pneumatique. En effet, aucun accès n'est disponible pour extraire l'organe électronique initialement mis en place par l'ouverture de la semelle ni pour insérer un nouvel organe électronique lorsque le dispositif est fixé sur la paroi de l'enveloppe pneumatique. Toute extraction de l'organe électronique nécessiterait un décollage au moins partiel de la semelle ou une détérioration du dispositif de fixation. Ces actes sont clairement visibles. De plus, optionnellement la présence d'un système de serrage de la paroi maintenu en place par le dispositif de retenue permet de retenir l'organe électronique en place dans le dispositif de fixation. Ainsi, dans cette configuration du dispositif de fixation, le risque d'éjection intempestive de l'organe électronique au travers de l'ouverture de la semelle en cas de décollement au moins partiel de la semelle par rapport à la paroi de l'enveloppe pneumatique est annulé. La présence du système de serrage maintenu en place sur le dispositif de fixation empêche tout mouvement relatif de l'organe électronique par rapport au dispositif de fixation dont son éjection intempestive.

Dans la seconde configuration de fonctionnement du dispositif de fixation où la paroi de maintien présente une faille générée par la déchirure volontaire de la paroi de maintien, il est possible d'extraire l'organe électronique initialement présent et d'en insérer un autre tout en maintenant le dispositif de fixation fixé sur la paroi de l'enveloppe pneumatique. L'inviolabilité du dispositif de fixation ainsi fixé à la paroi de l'enveloppe pneumatique est assurée d'une part par le système de serrage à usage unique de la paroi de maintien et d'autre part par le dispositif de retenue de ce système de serrage présent sur la paroi de maintien. Cependant le système de serrage doit être à usage unique. En effet, on entend ici par le terme « système de serrage à usage unique » que l'enlèvement du système de serrage n'est possible qu'avec une destruction au moins partielle de celui-ci. Ainsi, toute violation du dispositif de fixation est clairement visible par la destruction au moins partielle du système de serrage. De surcroit, le système de serrage de la paroi de maintien tout en empêchant l'extraction ou l'insertion de l'organe électronique permet aussi de limiter le risque d'éjection intempestive de l'organe électronique du dispositif de fixation. En effet en limitant le volume offert lors des mouvements des parties séparées par la faille de la paroi de maintien, l'éjection de l'organe électronique est impossible.

On définit ici un second repère fixe et local lié au dispositif de fixation dans lequel la direction verticale W est la direction perpendiculaire à la surface externe de la semelle en liaison avec la paroi de l'enveloppe pneumatique. Les directions longitudinale U et transversale V sont perpendiculaires entre elles et forment un trièdre direct avec la direction verticale W.

Avantageusement la paroi de maintien comprend sur la surface externe au moins une rainure partiellement continue servant de guide à la faille.

Ces moyens de guidage de la faille sont destinés à, d'une part, faciliter la déchirure et, d'autre part, la rendre prévisible et non aléatoire. Ainsi la faille de la paroi de maintien est contrôlée au juste nécessaire pour extraire et insérer un organe électronique. Ces moyens sont des rainures continues ou discontinues et ce quelle que soit la nature de la section de la rainure compris dans le groupe comprenant triangulaire, rectangulaire, polynomiale, à courbure continue, circulaire, elliptique. Bien entendu, la section peut aussi être une combinaison de ces caractéristiques. Ainsi la déchirure et le guidage de la faille de la paroi de maintien sont facilités par les caractéristiques techniques de la rainure.

Selon un mode de réalisation particulier, la paroi de maintien comprend N orifices traversants, N étant supérieur ou égal à 2.

Ces orifices traversant la paroi ont un premier rôle de mettre en communication le volume de la cavité interne de l'ensemble monté délimitée par la roue et l'enveloppe pneumatique avec le volume interne du dispositif de fixation. Ainsi, les grandeurs physiques telles que la pression et la température sont uniformisées entre la cavité interne de l'ensemble monté et le volume du dispositif de fixation. Par conséquent, les capteurs de l'organe électronique situés dans le volume du dispositif de fixation mesurant de telles grandeurs donnent une information fiable des grandeurs de l'ensemble monté.

De plus, ces orifices traversants peuvent servir aussi de points d'arrêt de la déchirure de la paroi de maintien. Dans ce cas, ils peuvent se trouver par exemple aux extrémités des moyens de guidage de la déchirure.

Selon un mode de réalisation très particulier, les orifices traversants ont une section à courbure continue.

La continuité de la courbure de ces orifices favorise l'uniformité des contraintes mécaniques sur le contour de l'orifice permettant de limiter les concentrations de contraintes trop fortes. De ce fait, on limite le risque d'initiation d'une déchirure de la paroi de maintien sur le contour de ces orifices.

Selon un mode de réalisation très particulier, tout point de la section des orifices traversants a un rayon de courbure supérieur ou égal à 1 millimètre.

L'orifice est de taille conséquente pour être un point d'arrêt efficace de la faille et de ce fait de la déchirure de la paroi de maintien. Dans un premier cas où la largeur de la faille est inférieure à la dimension de l'orifice par exemple de 1 millimètre, la faille débouche dans l'orifice de taille supérieure ce qui réduit les contraintes mécaniques en les uniformisant sur une surface plus grande. Dans un second cas où la faille a une largeur plus grande que la dimension principale de l'orifice, l'extrémité de la faille potentiellement ponctuelle avant qu'elle débouche dans l'orifice devient surfacique à courbure continue réduisant ainsi les contraintes mécaniques. Cependant dans ce second cas, la réduction des contraintes mécaniques n'est pas aussi forte que dans le premier cas.

Selon un mode de réalisation préférentiel, le volume d'accueil de l'organe électronique positionné dans le dispositif de fixation étant inscrit dans un cylindre droit autour d'un axe, appelé axe de référence, de hauteur 2H par rapport à la surface intérieure de la semelle et de diamètre 2R, les extrémités intérieures d'au moins K orifices traversants, K étant inférieur strictement à N, sont situées à une distance supérieure à R par rapport à l'axe de référence et à une distance verticale inférieure à H par rapport à la surface intérieure de la semelle.

Les K orifices traversants sont des points d'arrêt de la faille de la paroi de maintien du dispositif de fixation. Ces points d'arrêt sont suffisamment éloignés radialement par rapport à l'axe de référence de l'organe électronique pour permettre l'extraction ou l'insertion de cet organe électronique dans le dispositif de fixation. Bien entendu, la position verticale par rapport à la surface intérieure de la semelle du dispositif de fixation facilite ces opérations d'extraction ou d'insertion en limitant la partie de l'organe électronique réellement ancrée dans le dispositif de fixation. Enfin ces orifices ont un rôle de charnière naturelle pour les parties de la paroi de maintien qui sont séparées par la faille dans la seconde configuration facilitant ainsi les opérations d'extraction et d'insertion de l'organe électronique du dispositif de fixation.

Avantageusement, le dispositif de retenue du système de serrage de la paroi de maintien comprend un élément compris dans le groupe comprenant nervure, gorge.

Ainsi, le dispositif de retenue permet d'accueillir en toute sécurité le système de serrage. Dans le cas d'une nervure, le positionnement du système de serrage verticalement inférieure à la nervure rend impossible l'enlèvement naturel du système de serrage. Dans le cas d'une gorge, la mise en place du système de serrage dans la gorge empêche l'enlèvement naturel de celui-ci.

Selon un mode de réalisation spécifique, le dispositif de retenue du système de serrage de la paroi de maintien est partiellement continu.

Ainsi, il n'est pas nécessaire même si il est recommandé que le dispositif de retenue soit continu pour assurer sa fonction de maintien en place du système de serrage. Par exemple, il suffit qu'il soit continu par morceaux pour assurer sa fonction.

Selon un mode de réalisation très spécifique, le volume d'accueil de l'organe électronique positionné dans le dispositif de fixation étant inscrit dans un cylindre droit autour d'un axe, appelé axe de référence, de hauteur 2H par rapport à la surface intérieure de la semelle et de diamètre 2R, le dispositif de retenue du système de serrage à usage unique de la paroi de maintien s'étend circonférentiellement autour de l'axe de référence sur un secteur angulaire d'au moins 90 degrés, préférentiellement sur un secteur angulaire d'au moins 180 degrés.

En s'assurant qu'au moins un quart de la périphérie du dispositif de retenue soit efficace au sein du dispositif de fixation suffit à assurer la fonctionnalité de maintien du système de serrage sur le dispositif de fixation. Bien entendu, si la moitié du système de serrage de la paroi de maintien est ancrée, la tenue mécanique à la fatigue du dispositif de retenue et du système de serrage s'en trouve améliorée par une meilleure distribution des contraintes mécaniques. La solution idéale est une répartition homogène du dispositif de retenue sur la périphérie complète du dispositif de fixation.

Selon un mode de réalisation préférentiel, le volume d'accueil de l'organe électronique positionné dans le dispositif de fixation étant inscrit dans un cylindre droit autour d'un axe, appelé axe de référence, de hauteur 2H par rapport à la surface intérieure de la semelle et de diamètre 2R, le dispositif de retenue du système de serrage à usage unique de la paroi de maintien est situé à une distance radiale supérieure ou égale à R par rapport à l'axe de référence et à une distance verticale supérieure ou égale à H par rapport à la surface intérieure de la semelle.

Ainsi on assure que le dispositif de retenue se situe sur la partie supérieure de l'organe électronique permettant d'exercer une action efficace de maintien de l'organe électronique par le serrage de la paroi de maintien sur cet organe. De ce fait, le risque d'éjection intempestive de l'organe électronique du dispositif de fixation au travers de la faille de la paroi de maintien se trouve limité. De même dans le cas de la configuration initiale du dispositif de fixation sans faille sur la paroi de maintien, l'emploi d'un système de serrage et du dispositif de retenue ainsi positionné limite les déplacements relatifs de l'organe électronique par rapport au dispositif de fixation ce qui améliore la durée de vie mécanique de l'organe électronique et du dispositif de fixation.

Dans un mode de réalisation préférentiel, le dispositif de retenue du système de serrage de la paroi de maintien comprend une cavité, apte à recevoir au moins une partie du système de serrage de la paroi de maintien à usage unique.

Ainsi, le dispositif de retenue comprend un logement spécifique pour accueillir le système de serrage. Préférentiellement la section de cette cavité est à courbure continue. Cette cavité représente une charnière naturelle pour agrandir la section ouverte offerte par la faille lors des opérations d'insertion et d'extraction de l'organe électronique en augmentant le débattement des parties supérieures au dispositif de retenue de la paroi de maintien. Enfin la présence du système de serrage dans cette cavité augmente la surface de contact entre le dispositif de retenue et le système de serrage minimisant ainsi les contraintes mécaniques liées aux efforts de contact. La tenue mécanique des divers éléments s'en trouve améliorée notamment dans le cas d'une section de cavité et de système de serrage à courbure continue.

Selon un mode de réalisation très préférentiel, la cavité du dispositif de retenue du système de serrage de la paroi de maintien a une section accueillant au moins 40% de la section du système de serrage.

Ainsi, une partie non négligeable du système de serrage occupe parfaitement le volume offert par le dispositif de retenue. D'une part, ceci empêche l'enlèvement mécanique du système de serrage sans détérioration des éléments environnants. Et d'autre part, ceci réduit fortement la fonctionnalité de la charnière mécanique que procure la cavité limitant ainsi le risque d'éjection de l'organe électronique par la faille dans la seconde configuration de fonctionnement.

Avantageusement, le contour de l'ouverture de la semelle comprend un rebord s'étendant intérieurement en créant un rétrécissement à des fins de retenue de l'organe électronique dans le volume fermé et un entretoisement définissant un espace E entre l'organe électronique et la paroi de l'enveloppe pneumatique. La distance E est supérieure ou égale à 2 millimètres et inférieure ou égale à 4 millimètres.

La première fonctionnalité de ce rebord est de maintenir l'organe électronique au sein du dispositif de fixation en cas de rupture de la liaison entre la surface externe de la semelle et la paroi de l'enveloppe pneumatique. Sans action mécanique extérieure, l'organe électronique se retrouve enfermé dans le dispositif de fixation. De plus, on assure un découplage mécanique entre l'enveloppe pneumatique et l'organe électronique ce qui permet de minimiser la transmission d'énergie, lors d'événements exceptionnel de type choc subis par l'enveloppe pneumatique, vers l'organe électronique. De plus cela permet aussi de minimiser les frottements entre l'organe électronique et la paroi de l'enveloppe pneumatique. Cela améliore la durée de vie de l'organe électronique et de ses composants.

Selon un mode de réalisation très préférentiel la semelle du dispositif de fixation comprend au moins un marqueur situé sur la partie verticalement supérieure de la semelle.

La présence de ce marqueur permet d'orienter le dispositif de fixation correctement par rapport à la paroi de l'enveloppe pneumatique au cas où les fonctionnalités de l'organe électronique le nécessitent comme par exemple, les diverses composantes de l'accélération dans des directions privilégiées de l'enveloppe pneumatique.

Ces marqueurs qui sont des détails géométriques visibles sont compris dans le groupe comprenant ergot, échancrure, bossage, creux. Ces marqueurs sont facilement identifiables à l'aide d'une caméra optique en vue de dessus, la face visiblement accessible du dispositif de fixation, permettant une automatisation de l'opération de pose du dispositif de fixation sur la paroi de l'enveloppe pneumatique.

Avantageusement, le dispositif de fixation est constitué avec un matériau élastomère.

Les propriétés hyper élastiques des matériaux élastomères favorisent la déformation élastique du dispositif de fixation permettant l'insertion et l'extraction de l'organe électronique du dispositif de fixation. De plus, la paroi de l'enveloppe pneumatique n'étant pas généralement plane, l'élasticité de ce matériau permet de créer une surface de liaison efficace entre la semelle et la paroi de l'enveloppe pneumatique.

Parmi les matériaux élastomère, les mélanges caoutchouteux à base d'élastomères diéniques saturés ou insaturés tels du butyle, du SBR, du polybutadiène, du caoutchouc naturel, du polyisoprène sont de bons candidats en raison de leur compatibilité avec les mélanges caoutchouteux de l'enveloppe pneumatique. L'avantage du butyle est de procurer une excellente résistance à l'oxydation. On peut aussi utiliser comme élastomère un EPDM (acronyme en anglais de *Ethylene Propylene Diene Monomer rubber*).

Enfin, ces mélanges caoutchouteux ne nuisent pas à la performance de communication radiofréquence des organes électroniques du fait qu'ils sont des isolants électriques naturels dont leur propriété isolante peut être ajustée par l'emploi plus ou moins réduit de charges conductrices renforçantes.

Selon un mode de réalisation privilégiée où la faille est formée et définissant une lèvre sur chaque partie disjointe de la paroi de maintien, le dispositif de fixation comprend un système de serrage à usage unique apte à rapprocher les lèvres de la faille au niveau du dispositif de retenue.

En effet, le dispositif de retenue sur la paroi de maintien, accueillant le système de serrage, est traversé par la faille en au moins un point géométrique. Le positionnement du dispositif de retenue tend alors à minimiser la section oouverte offerte par le dépliement des parties séparées de la paroi de maintien. De ce fait, la capacité de dépliement et d'ouverture de la paroi de maintien s'en trouve amoindrie. L'extraction et l'insertion de l'organe électronique au travers de la faille devient impossible en présence du système de serrage. L'emploi d'un système de serrage à usage unique est indispensable pour vérifier l'inviolabilité du dispositif de fixation dans cette seconde configuration de fonctionnement.

Selon un mode de réalisation très privilégiée, le système de serrage à usage unique de la paroi de maintien comprend un anneau rétractable.

Ainsi, le système de serrage est à usage unique puisque l'anneau est fermé par nature, son enlèvement nécessite la rupture de l'anneau en au moins un point pour augmenter son développement permettant de le libérer du dispositif de retenue. Préférentiellement la section de l'anneau est à courbure continue-permettant de limiter les discontinuités qui introduisent des concentrations de contraintes aussi bien dans le système de serrage que les pièces en contact tendant à réduire la durée de vie de l'anneau et de la paroi de maintien.

### Description brève des dessins

L'invention sera mieux comprise à la lecture de la description qui va suivre donnée uniquement à titre d'exemple non limitatif et faite en se référant aux figures annexées dans lesquelles les mêmes numéros de référence désignent partout des parties identiques et dans lesquelles :
- La figure 1 présente une vue en perspective d'un dispositif de fixation selon l'invention dans sa première configuration de fonctionnement ;
- La figure 2 présente une vue en perspective et en coupe d'un dispositif de fixation comprenant quatre rainures discontinues formant un guidage pour la faille selon l'invention ;
- La figure 3 présente une vue en perspective d'un dispositif de fixation dans sa seconde configuration de fonctionnement dont la faille est constituée à l'aide de deux rainures continues selon l'invention ;
- La figure 4 présente une vue en perspective d'un dispositif de fixation dans sa seconde configuration selon l'invention où un système de serrage à usage unique est mis en place dans le dispositif de retenue.

### Description détaillée de modes de réalisation

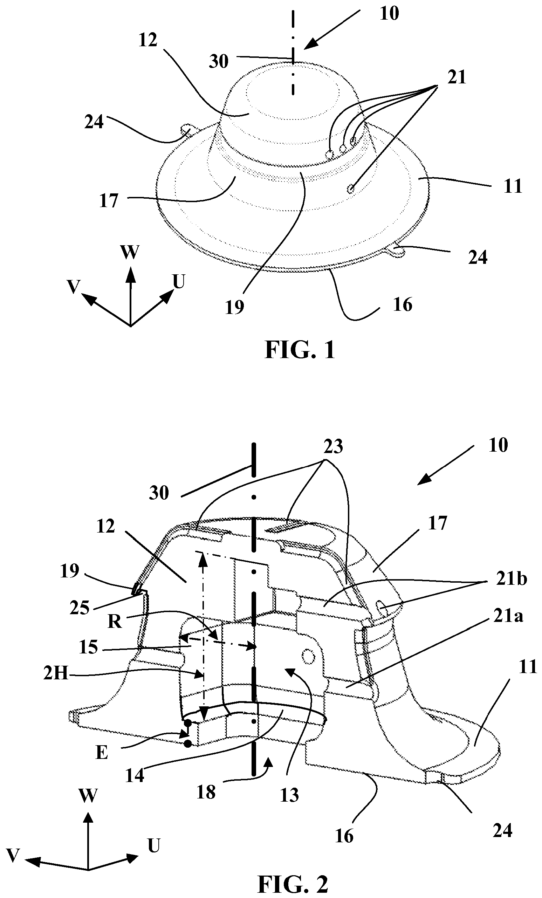

Sur la figure 1, on distingue un dispositif de fixation 10 d'un organe électronique de type TMS (acronyme en anglais de *Tyre Mounted System*) dans un matériau comprenant un ou plusieurs composants compris dans le groupe comprenant caoutchouc naturel, polyisoprène, polybutadiène, SBR, butyle, éthylène propylène diène monomère. Ces mélanges, formulés avec des charges non conductrices ou des taux de charges conductrices faibles, permettent une performance de communication en radiofréquence suffisante pour l'organe électronique dans les gammes de fréquences UHF (acronyme de Ultra Hautes Fréquences). De plus ces mélanges ont une souplesse naturelle permettant la déformation élastique du dispositif de fixation. Ce dispositif de fixation 10 comprend une semelle 11 et une paroi de maintien 12 qui constituent ensemble le dispositif de fixation 10. Le dispositif de fixation 10 est ici dans sa première configuration de fonctionnement où la paroi de maintien 12 constitue une surface fermée. Le dispositif présente un axe de rotation 30 définissant la direction verticale W dans le repère local du dispositif de fixation 10.

La semelle 11 est munie d'une ouverture ayant permis l'introduction de l'organe électronique au sein du dispositif de fixation 10. Au niveau de la surface externe 16 de la semelle 11, le dispositif de fixation 10 est apte à être fixé à la paroi d'une enveloppe pneumatique par l'intermédiaire de moyens de fixation standards des produits élastomères de type colle MS-Polymère (acronyme de Polyéther modifié silane), MS PDMS (acronyme de Polydiméthylsiloxane modifié Silane), ruban adhésif double faces ou gomme de liaison. Enfin la partie verticalement supérieure de la semelle par rapport à la surface externe de la semelle comprend ici en tant que marqueurs 24 deux ergots arrondis situés de façon diamétralement opposés s'étendant radialement extérieurement à la semelle 11. La direction parallèle à l'alignement des marqueurs 24 correspond à la direction transversale V du repère local. Enfin la direction longitudinale U du repère local est une direction perpendiculaire à l'alignement des marqueurs 24. Ces marqueurs 24 permettent un positionnement du dispositif de fixation 10 et par voie de conséquence de l'organe électronique au sein de l'enveloppe pneumatique. Ces marqueurs 24 sont indispensables si l'organe électronique permet, par exemple, une distinction des grandeurs physiques de l'ensemble monté selon les directions axiale A et circonférentielle S de l'ensemble monté en cas de pose du dispositif de fixation 10 au droit de la bande de roulement de l'enveloppe pneumatique.

La paroi de maintien 12 comprend ici plusieurs orifices 21 cylindriques joignant la surface externe 17 de la paroi de maintien 12 à la surface interne de celle-ci. Ces orifices 21 mettent en communication le fluide contenu dans le volume de l'ensemble monté avec celui qui est contenu au sein du dispositif de fixation 10. La paroi de maintien 12 est apte à être déchirée pour former une faille séparant la paroi de maintien 12 en au moins deux parties distinctes permettant l'obtention de la seconde configuration de fonctionnement du dispositif de fixation 10. La souplesse structurelle et matérielle de la paroi de maintien 12 autorise la déchirure de celle-ci à l'aide d'un objet comprenant au moins une lame de coupe.

Enfin la paroi de maintien 12 du dispositif de fixation 10 est équipée d'une gorge 19 servant de dispositif de retenue pour un système de serrage de type anneau qui n'est pas représenté. En effet, dans la première configuration du dispositif de fixation 10, le système de serrage est optionnel puisque l'extraction de l'organe électronique au travers de la paroi de maintien 12 est impossible, le système de serrage ayant alors comme fonction essentielle de maintenir ensemble l'organe électronique et la paroi de maintien 12. Ce maintien limite ainsi de possibles chocs à l'organe électronique lors de mouvement entre les deux éléments et des endommagements provoqués par ces chocs sur les surfaces internes de la semelle 11 et de la paroi de maintien 12.

La figure 2 présente un autre dispositif de fixation 10 apte à se fixer à la paroi d'une enveloppe pneumatique à l'aide de moyens de fixation standards des produits élastomères. Le dispositif de fixation 10 comprend d'une part une semelle 11 et une paroi de maintien 12. La semelle 11 sert d'interface de fixation au travers de la surface externe 16. Une ouverture 18 traverse la semelle 11 depuis la surface externe 16 vers la surface interne 14 par laquelle l'organe électronique est introduit dans le volume 13 du dispositif de fixation 10. L'ouverture 18 présente sur sa périphérie un rebord créant un rétrécissement de l'ouverture 18. Ce rétrécissement empêche une extraction de l'organe électronique sans effort lorsque celui-ci est dans le volume 13 du dispositif de fixation 10. Ce rebord crée aussi un entretoisement E entre les surface interne 14 et externe 16 de la semelle. Ainsi un découplage mécanique est réalisé entre l'organe électronique reposant sur la surface interne 14 de la semelle 11 et l'enveloppe pneumatique présente au niveau de la surface externe 16 de celle-ci. Ici l'espace E est de l'ordre de 3 millimètres.

Le volume 13 est délimité par la surface interne 14 de la semelle 11 et la surface interne 15 de la paroi de maintien 12. Ce volume 13 est apte à accueillir l'organe électronique dans une configuration avec ou sans jeu. Ainsi le volume 13 est inscrit aussi dans le cylindre circonscrit de l'organe électronique autour d'un axe de rotation 30. Par la suite on désignera par le terme partie verticalement supérieure de la paroi de maintien, tout point matériel situé à une distance verticale H par rapport à la surface interne 14 de la semelle 11. L'autre partie de la paroi de maintien 12 sera intégrée dans la partie verticalement inférieure.

Plusieurs orifices traversent la paroi de maintien 12 depuis la surface externe 17 jusqu'à la surface interne 15 appartenant au groupe des orifices 21a ou 21b. Les orifices 21b permettent de mettre en communication le fluide externe au dispositif de fixation 10 avec le fluide contenu dans le volume 13. On notera que ces orifices sont situées à une distance verticale par rapport à la surface interne 14 de la semelle supérieure à H tandis que les orifices du groupe 21a sont situés en dessous de cette distance verticale. En revanche, tous les orifices 21 ont une ouverture sur l'extérieur du dispositif de fixation 10 située à une distance radiale de l'axe de référence 30 supérieure à R.

De plus, la paroi de maintien 12 présente sur sa surface externe 17 une nervure 19 radialement extérieure positionnée dans la partie verticalement supérieure de la paroi de maintien 12 qui sert de dispositif de retenue 19 d'un système de serrage à usage unique de la paroi de maintien. Ce dispositif de retenue 19 est positionné radialement par rapport à l'axe de référence 30 à une distance supérieure à R. Ce positionnement radial permet lorsque le dispositif de fixation 10 est dans sa seconde configuration de fonctionnement un dépliement de la paroi de maintien 12 suffisant pour extraire et insérer l'organe électronique du volume 13 interne au dispositif de fixation 10. Cette nervure est équipée ici d'une cavité 25 sur sa partie verticalement inférieure accueillant l'éventuel système de serrage à usage unique. Cette cavité 25 joue le rôle d'une charnière entre la partie de la paroi de maintien 12 située verticalement supérieure à la nervure avec la partie de la paroi de maintien située verticalement inférieure à la nervure en l'absence d'un système de serrage à usage unique. Cette charnière facilite le dépliement des parties disjointes de la paroi de maintien 12 lorsque le dispositif est dans sa seconde configuration de fonctionnement.

La surface externe 17 de la paroi de maintien 12 présente aussi des rainures 23, dans notre cas quatre également réparties sur la périphérie complète du dispositif de fixation 10. Ces rainures 23 sont dirigées selon la direction principalement verticale W et elles ont une section circulaire. Ces rainures 23 servent de guide à l'outil de coupe lors de la création de la faille séparant la paroi de maintien 12 en quatre parties. Ces rainures 23 se terminent ici dans leur partie inférieure dans des orifices 21a traversant la paroi. Ces orifices 21a circulaires servent alors de point d'arrêt de la déchirure de la paroi de maintien 12 en limitant les concentrations de contraintes mécaniques à l'extrémité de la faille. De plus, ces orifices sont aussi d'excellentes charnières autour des lesquelles les parties disjointes de la paroi de maintien 12 peuvent naturellement se débattre lorsque le dispositif de fixation 10 passe dans sa seconde configuration de fonctionnement.

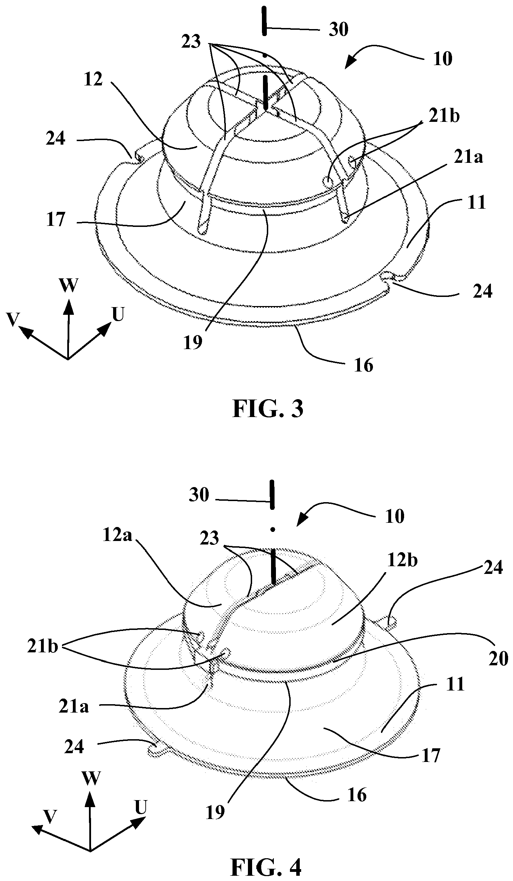

La figure 3 est une vue en perspective du dispositif de fixation 10 de la figure 2 dans sa seconde configuration de fonctionnement. Ce dispositif présente un axe de référence 30 permettant d'orienter correctement le dispositif de fixation 10 par rapport à la paroi de l'enveloppe pneumatique. Par voie indirecte, l'organe électronique est positionné par rapport à l'enveloppe pneumatique. De plus, la semelle 11 du dispositif de fixation 10 possède des marqueurs 24 diamétralement opposées sous la forme d'encoche permettant un positionnement angulaire du dispositif de fixation 10 par rapport à la paroi de l'enveloppe pneumatique. Dans d'autres formes de semelle 11 ne présentant pas d'axe de rotation comme une semelle en forme de losange, ces marqueurs 24 pourraient être, par exemple, des détails géométriques de la semelle 11 comme les angles du losange.

On distingue bien dans la semelle 11 la surface externe 16 qui sert d'interface de liaison avec la paroi de l'enveloppe pneumatique. La propriété souple du matériau du dispositif de fixation 10 permet à la surface externe 16 de la semelle 11 d'épouser la surface de la paroi de l'enveloppe pneumatique afin de constituer une liaison efficace entre les deux éléments.

La paroi de maintien 12 solidairement liée à la semelle 11 présente une faille constituée à partir des quatre rainures 23 présentes initialement sur la surface externe 17 de la paroi de maintien 12. La paroi de maintien 12 comprend aussi sur sa partie verticalement supérieure un dispositif de retenue 19. La faille est ici de la largeur de la rainure 23 soit de l'ordre de 2 millimètres. Le système de serrage à usage unique est non représenté sur cette figure. Le dispositif de retenue 19 se présente comme une nervure discontinue de révolution autour de l'axe de rotation 30. Les discontinuités de la nervure ont été réalisées au moment de la création de la faille à l'aide de l'outil de coupe. Ces discontinuités sont situées verticalement au droit des rainures 23.

La faille permet l'ouverture de la partie verticalement supérieure de la paroi de maintien 12 par l'intermédiaire de quatre structures disjointes de la paroi de maintien 12. Ces parties disjointes de la paroi de maintien 12 peuvent pivoter radialement au niveau de la cavité du dispositif de retenue 19. De plus, ces structures disjointes peuvent aussi pivoter circonférentiellement au niveau des extrémités de la faille constituées par certains orifices 21a. Ces deux rotations permet de libérer un espace suffisant sur la partie verticalement supérieure de la paroi de maintien 12 afin de réaliser les étapes d'extraction ou d'insertion de l'organe électronique au sein du volume interne du dispositif de fixation 10. De plus la position verticale des orifices 21a servant d'extrémités de la faille permet d'une part de libérer l'espace pour la manutention de l'organe électronique. D'autre part, elles permettent aussi de limiter les déformations mécaniques de la semelle 11 permettant ainsi de garantir la fixation de celle-ci sur la paroi de l'enveloppe pneumatique lors des phases de manutention de l'organe électronique. Le changement de l'organe électronique dans le dispositif de fixation 10 a lieu sur l'enveloppe pneumatique.

La figure 4 est une vue en perspective d'un dispositif de fixation 10 selon l'invention dans sa seconde configuration de fonctionnement présentant un axe de rotation 30. Le dispositif de fixation 10 comprend une semelle 11 et une paroi de maintien solidairement liées entre elles.

La semelle 11 présente sur sa périphérie deux marqueurs 24 sous la forme d'ergot positionnés selon la direction U permettant un positionnement précis du dispositif de fixation 10 par rapport à la paroi de l'enveloppe pneumatique.

La paroi de maintien est constituée par deux structures disjointes 12a et 12b sur sa partie verticalement supérieure. La faille servant de séparation entre ses deux structures 12a et 12b est obtenue à l'aide de deux rainures 23 initialement discontinues selon la direction U. La largeur de la faille est ici plus petite que la largeur des rainures 23. La faille se termine dans certains des orifices 21a de la paroi de maintien situés dans la partie verticalement inférieure. Le positionnement de ces orifices 21a servant de point d'arrêt à la faille permet d'obtenir un espace suffisant sur la partie verticalement supérieure de la paroi de maintien pour réaliser les étapes de manutention de l'organe électronique dans le dispositif de fixation 10. En effet, ces orifices 21a servent de charnière aux structures disjointes 12a et 12b de la paroi de maintien. De plus les structures disjointes 12a et 12b peuvent aussi pivoter radialement autour de la cavité du dispositif de retenue 19 de la paroi de maintien. En effet, le dispositif de retenue 19 est ici réalisée à l'aide d'une gorge de section rectangulaire servant aussi de cavité pour accueillir le système de serrage à usage unique 20.

Le système de serrage à usage unique 20 est ici représenté par un collier de type colson constitué d'un mélange en rilsan, polyamide ou nylon. Ce collier comprend un lien de section rectangulaire de longueur 3 millimètres et de largeur 1,5 millimètres. Ce collier présente aussi un dispositif de rétractabilité permettant d'une part de réduire la longueur du lien et d'autre part de former l'anneau. Le dispositif de rétractabilité est employé pour ajuster le diamètre au collier afin de figer la position relative des structures disjointes 12a et 12b de la paroi de maintien. L'extrémité libre du lien après formation et ajustement de l'anneau est coupée au raz du dispositif de rétractabilité afin de ne pas constituer une partie saillante pour les parois de l'enveloppe pneumatique.

L'ajustement de l'anneau conduit à la fermeture de la faille, c'est à-dire le rapprochement des lèvres de la faille, initialement formée par l'outil de coupe au niveau des structures disjointes 12a et 12b de la paroi de maintien. De plus, l'ajustement de l'anneau conduit à bloquer en position la charnière constituée par la cavité dans le dispositif de retenue 19 en occupant le volume de cette cavité à l'aide du système de serrage à usage unique 20. Ainsi le pivotement des structures disjointes 12a et 12b sur la partie verticalement supérieure au dispositif de retenue 19 s'en trouve limité n'autorisant pas l'extraction ni l'insertion de l'organe électronique du dispositif de fixation 10 par l'espace offert par ce pivotement. De ce fait l'inviolabilité du dispositif de fixation 10 est assurée dans cette seconde configuration de fonctionnement. Seul l'enlèvement du système de serrage à usage unique 20, obtenu par une destruction au moins partielle de ce dernier, contenu dans le dispositif de retenue 19 permet la création d'un espace suffisant pour les manipulations de l'organe électronique. Dans le cas du collier de type colson, la section du lien par une lame de coupe au travers de la faille ou la destruction du dispositif de rétractabilité permet la libération de ce collier colson contenu dans la gorge de la paroi de maintien.

Bien entendu d'autres systèmes de serrage à usage unique peuvent aussi être employés tels que par exemple des anneaux en caoutchouc thermodurcissable dans le groupe comprenant caoutchouc naturel, du butyle, du nitrile, de l'éthylène propylène diène monomère ou en caoutchouc thermosoudable dans le groupe comprenant polyuréthane et polyester.

## Revendications

1. Dispositif de fixation (10) à une paroi d'une enveloppe pneumatique d'un organe électronique, ledit dispositif de fixation (10) en matériau élastomère, comprenant :
- une semelle (11) apte à être fixée à la paroi de l'enveloppe pneumatique ;
- une paroi de maintien (12) fermée, liée à la semelle (11) et définissant avec ladite semelle (11) un volume fermé (13) défini par les surfaces intérieures (14, 15) de ladite semelle (11) et de ladite paroi de maintien (12) et apte à accueillir ledit organe électronique ;
- ladite semelle (11) présentant une ouverture (18) par laquelle peut être introduite ledit organe électronique de sorte que lorsque ladite semelle (11) est fixée à la paroi de l'enveloppe pneumatique, ladite ouverture (18) est fermée par ladite paroi de l'enveloppe pneumatique ;
**caractérisé en ce que** ladite paroi de maintien (12) est déchirable par une lame de coupe pour former au moins une faille permettant l'extraction et l'insertion dudit organe électronique ; et
**en ce que** ladite paroi de maintien (12) présente sur sa surface externe (17) au moins un dispositif de retenue (19) apte à accueillir un système de serrage (20) de la paroi de maintien.

2. Dispositif de fixation (10) selon la revendication 1, dans lequel la paroi de maintien (12) comprend sur sa surface externe (17) au moins une rainure (23) partiellement continue servant de guide à ladite faille.

3. Dispositif de fixation (10) selon l'une quelconque des revendications précédentes, dans lequel la paroi de maintien (12) comprend N orifices traversants (21, 21a, 21b), N étant supérieur ou égal à 2.

4. Dispositif de fixation (10) selon la revendication 3, dans lequel les orifices traversants (21, 21a, 21b) ont une section à courbure continue.

5. Dispositif de fixation (10) selon la revendication 4, dans lequel tout point de la section des orifices traversants (21, 21a, 21b) a un rayon de courbure supérieur ou égal à 1 millimètre.

6. Dispositif de fixation (10) selon l'une quelconque des revendications 3 à 5, dans lequel le volume d'accueil de l'organe électronique positionné dans ledit dispositif de fixation (10) étant inscrit dans un cylindre droit autour d'un axe, appelé axe de référence (30), de hauteur 2H par rapport à la surface interne (14) de la semelle (11) et de diamètre 2R, les extrémités intérieures d'au moins K orifices traversants (21a), K étant inférieur strictement à N, sont situées à une distance supérieure à R par rapport à l'axe de référence (30) et à une distance verticale inférieure à H par rapport à la surface intérieure (14) de ladite semelle (11).

7. Dispositif de fixation (10) selon l'une quelconque des revendications précédentes, dans lequel le dispositif de retenue (19) du système de serrage de la paroi de maintien est compris dans le groupe comprenant nervure, gorge.

8. Dispositif de fixation (10) selon l'une quelconque des revendications précédentes, dans lequel le dispositif de retenue (19) du système de serrage de la paroi de maintien est partiellement continu.

9. Dispositif de fixation (10) selon l'une quelconque des revendications précédentes, dans lequel, le volume d'accueil de l'organe électronique positionné dans ledit dispositif de fixation (10) étant inscrit dans un cylindre droit autour d'un axe, appelé axe de référence (30), de hauteur 2H par rapport à la surface intérieure (14) de la semelle (11) et de diamètre 2R, le dispositif de retenue (19) du système de serrage de la paroi de maintien s'étend circonférentiellement sur un secteur angulaire d'au moins 90 degrés autour de l'axe de référence (30).

10. Dispositif de fixation (10) selon l'une quelconque des revendications précédentes, dans lequel, le volume d'accueil de l'organe électronique positionné dans ledit dispositif de fixation (10) étant inscrit dans un cylindre droit autour d'un axe, appelé axe de référence (30), de hauteur 2H par rapport à la surface intérieure (14) de la semelle (11) et de diamètre 2R, le dispositif de retenue (19) du système de serrage de la paroi de maintien est situé à une distance radiale supérieure ou égale à R par rapport à l'axe de référence (30) et à une distance verticale supérieure ou égale à H par rapport à la surface intérieure (14) de la semelle (11).

11. Dispositif de fixation (10) selon l'une quelconque des revendications précédentes, dans lequel le dispositif de retenue (19) du système de serrage de la paroi de maintien comprend une cavité (25) apte à recevoir au moins une partie du système de serrage (20) de la paroi de maintien.

12. Dispositif de fixation (10) selon la revendication 11, dans lequel la cavité (25) du dispositif de retenue (19) du système de serrage de la paroi de maintien a une section accueillant au moins 40% de la section du système de serrage (20).

13. Dispositif de fixation (10) selon l'une quelconque des revendications précédentes, dans lequel un rebord bordant l'ouverture (18) de la semelle (11) s'étendant intérieurement en créant un rétrécissement à des fins de retenue de l'organe électronique dans le volume fermé (13) et un entretoisement définissant un espace E entre l'organe électronique et la paroi de l'enveloppe pneumatique, la distance E est supérieure ou égale à 2 millimètres et inférieure et égale à 4 millimètres.

14. Dispositif de fixation (10) selon l'une quelconque des revendications précédentes, dans lequel la semelle (11) comprend au moins un marqueur (24) situé sur la partie verticalement supérieure de la dite semelle (11).

15. Dispositif de fixation (10) selon l'une quelconque des revendications précédentes, dans lequel la faille étant formée et définissant une lèvre sur chaque structure disjointe de la paroi de maintien (12), le dispositif de fixation (10) comprend un système de serrage (20) à usage unique apte à rapprocher les lèvres de la faille au moins au niveau du dispositif de retenue (19).

16. Dispositif de fixation (10) selon la revendication 15, dans lequel le système de serrage (20) à usage unique de la paroi de maintien comprend un anneau rétractable.

## Patentansprüche

1. Vorrichtung (10) zur Befestigung eines elektronischen Bauteils an einer Wand eines Reifenmantels, wobei die Befestigungsvorrichtung (10) aus Elastomermaterial enthält:
- eine Fußplatte (11), die an der Wand des Reifenmantels befestigt werden kann;
- eine geschlossene Haltewand (12), die mit der Fußplatte (11) verbunden ist und mit der Fußplatte (11) ein geschlossenes Volumen (13) definiert, das von den Innenflächen (14, 15) der Fußplatte (11) und der Haltewand (12) definiert wird und das elektronische Bauteil aufnehmen kann;
- wobei die Fußplatte (11) eine Öffnung (18) aufweist, durch die das elektronische Bauteil eingeführt werden kann, so dass, wenn die Fußplatte (11) an der Wand des Reifenmantels befestigt ist, die Öffnung (18) von der Wand des Reifenmantels verschlossen wird;
**dadurch gekennzeichnet, dass** die Haltewand (12) durch ein Schneidmesser aufgerissen werden kann, um mindestens eine Spalte zu formen, die die Entnahme und die Einführung des elektronischen Bauteils erlaubt; und dass die Haltewand (12) an ihrer Außenfläche (17) mindestens eine Rückhaltevorrichtung (19) aufweist, die ein Klemmsystem (20) der Haltewand aufnehmen kann.

2. Befestigungsvorrichtung (10) nach Anspruch 1, wobei die Haltewand (12) an ihrer Außenfläche (17) mindestens eine teilweise kontinuierliche Rille (23) aufweist, die als Führung für die Spalte dient.

3. Befestigungsvorrichtung (10) nach einem der vorhergehenden Ansprüche, wobei die Haltewand (12) N Durchgangsöffnungen (21, 21a, 21b) enthält, wobei N größer als oder gleich 2 ist.

4. Befestigungsvorrichtung (10) nach Anspruch 3, wobei die Durchgangsöffnungen (21, 21a, 21b) einen Querschnitt mit kontinuierlicher Krümmung haben.

5. Befestigungsvorrichtung (10) nach Anspruch 4, wobei jeder Punkt des Querschnitts der Durchgangsöffnungen (21, 21a, 21b) einen Krümmungsradius größer als oder gleich 1 Millimeter hat.

6. Befestigungsvorrichtung (10) nach einem der Ansprüche 3 bis 5, wobei, da das Aufnahmevolumen des in der Befestigungsvorrichtung (10) positionierten elektronischen Bauteils in einem geraden Zylinder um eine Bezugsachse (30) genannte Achse herum enthalten ist, mit einer Höhe 2H bezüglich der Innenfläche (14) der Fußplatte (11) und einem Durchmesser 2R, die inneren Enden von mindestens K Durchgangsöffnungen (21a), wobei K strikt kleiner als N ist, sich in einem Abstand größer als R bezüglich der Bezugsachse (30) und in einem senkrechten Abstand geringer als H bezüglich der Innenfläche (14) der Fußplatte (11) befinden.

7. Befestigungsvorrichtung (10) nach einem der vorhergehenden Ansprüche, wobei die Rückhaltevorrichtung (19) des Klemmsystems der Haltewand in der Gruppe enthalten ist, die Rippe, Kehle enthält.

8. Befestigungsvorrichtung (10) nach einem der vorhergehenden Ansprüche, wobei die Rückhaltevorrichtung (19) des Klemmsystems der Haltewand teilweise kontinuierlich ist.

9. Befestigungsvorrichtung (10) nach einem der vorhergehenden Ansprüche, wobei, da das Aufnahmevolumen des in der Befestigungsvorrichtung (10) positionierten elektronischen Bauteils in einem geraden Zylinder um eine Bezugsachse (30) genannte Achse herum enthalten ist, mit einer Höhe 2H bezüglich der Innenfläche (14) der Fußplatte (11) und einem Durchmesser 2R, die Rückhaltevorrichtung (19) des Klemmsystems der Haltewand sich in Umfangsrichtung über einen Winkelsektor von mindestens 90 Grad um die Bezugsachse (30) herum erstreckt.

10. Befestigungsvorrichtung (10) nach einem der vorhergehenden Ansprüche, wobei, da das Aufnahmevolumen des in der Befestigungsvorrichtung (10) positionierten elektronischen Bauteils in einem geraden Zylinder um eine Bezugsachse (30) genannte Achse herum enthalten ist, mit einer Höhe 2H bezüglich der Innenfläche (14) der Fußplatte (11) und einem Durchmesser 2R, die Rückhaltevorrichtung (19) des Klemmsystems der Haltewand sich in einem radialen Abstand größer als oder gleich R bezüglich der Bezugsachse (30) und in einem senkrechten Abstand größer als oder gleich H bezüglich der Innenfläche (14) der Fußplatte (11) befindet.

11. Befestigungsvorrichtung (10) nach einem der vorhergehenden Ansprüche, wobei die Rückhaltevorrichtung (19) des Klemmsystems der Haltewand einen Hohlraum (25) enthält, der mindestens einen Teil des Klemmsystems (20) der Haltewand aufnehmen kann.

12. Befestigungsvorrichtung (10) nach Anspruch 11, wobei der Hohlraum (25) der Rückhaltevorrichtung (19) des Klemmsystems der Haltewand einen Querschnitt hat, der mindestens 40% des Querschnitts des Klemmsystems (20) aufnimmt.

13. Befestigungsvorrichtung (10) nach einem der vorhergehenden Ansprüche, wobei, da eine Randleiste die Öffnung (18) der Fußplatte (11) umrandet, die sich innen erstreckt, indem sie eine Verengung zum Zweck des Rückhalts des elektronischen Bauteils im geschlossenen Volumen (13) erzeugt, und eine Verstrebung einen Raum E zwischen dem elektronischen Bauteil und der Wand des Reifenmantels definiert, der Abstand E größer als oder gleich 2 Millimeter und kleiner als und gleich 4 Millimeter ist.

14. Befestigungsvorrichtung (10) nach einem der vorhergehenden Ansprüche, wobei die Fußplatte (11) mindestens eine Markierung (24) enthält, die sich auf dem senkrecht oberen Teil der Fußplatte (11) befindet.

15. Befestigungsvorrichtung (10) nach einem der vorhergehenden Ansprüche, wobei, da die Spalte geformt ist und eine Lippe auf jeder getrennten Struktur der Haltewand (12) bildet, die Befestigungsvorrichtung (10) ein Einweg-Klemmsystem (20) enthält, das die Lippen der Spalte zumindest im Bereich der Rückhaltevorrichtung (19) einander annähern kann.

16. Befestigungsvorrichtung (10) nach Anspruch 15, wobei das Einweg-Klemmsystem (20) der Haltewand einen schrumpfbaren Ring enthält.

## Claims

1. Device (10) for securing an electronic member to a wall of a tyre casing, the said securing device (10), made of elastomer material, comprising:
- a base (11) able to be secured to the wall of the tyre casing;
- a closed retaining wall (12), connected to the base (11) and with the said base (11) defining a closed volume (13) defined by the interior surfaces (14, 15) of the said base (11) and of the said retaining wall (12) and which is able to accommodate the said electronic member;
- the said base (11) having an opening (18) via which the said electronic member can be introduced so that when the said base (11) is secured to the wall of the tyre casing, the said opening (18) is closed by the said wall of the tyre casing;
**characterized in that** the said retaining wall (12) is able to be torn with a cutting blade in order to form at least one fault that allows the said electronic member to be extracted and inserted; and
**in that** the said retaining wall (12) on its external surface (17) has at least one retaining device (19) able to accommodate a clamping system (20) for clamping the retaining wall.

2. Securing device (10) according to Claim 1, in which the retaining wall (12) comprises on its external surface (17) at least one partially continuous groove (23) which serves to guide the said fault.

3. Securing device (10) according to either one of the preceding claims, in which the retaining wall (12) comprises N through-orifices (21, 21a, 21b), N being greater than or equal to 2.

4. Securing device (10) according to Claim 3, in which the through-orifices (21, 21a, 21b) have a cross section with continuous curvature.

5. Securing device (10) according to Claim 4, in which any point on the cross section of the through-orifices (21, 21a, 21b) has a radius of curvature greater than or equal to 1 millimetre.

6. Securing device (10) according to any one of Claims 3 to 5, in which, with the volume housing the electronic member positioned in the said securing device (10) being inscribed inside a right cylinder that is upright about an axis, referred to as the reference axis (30), of height 2H with respect to the interior surface (14) of the base (11), and of diameter 2R, the interior ends of at least K through-orifices (21a), K being strictly less than N, are situated at a distance greater than R away from the reference axis (30) and at a vertical distance less than H away from the interior surface (14) of the said base (11).

7. Securing device (10) according to any one of the preceding claims, in which the retaining device (19) for the clamping system that clamps the retaining wall is comprised in the group including grooves and channels.

8. Securing device (10) according to any one of the preceding claims, in which the retaining device (19) for the clamping system that clamps the retaining wall is partially continuous.

9. Securing device (10) according to any one of the preceding claims, in which, with the volume housing the electronic member positioned in the said securing device (10) being inscribed inside a right cylinder that is upright about an axis, referred to as the reference axis (30), of height 2H with respect to the interior surface (14) of the base (11), and of diameter 2R, the retaining device (19) for the clamping system that clamps the retaining wall extends circumferentially over an angular sector of at least 90 degrees about the reference axis (30).

10. Securing device (10) according to any one of the preceding claims, in which, with the volume housing the electronic member positioned in the said securing device (10) being inscribed inside a right cylinder that is upright about an axis, referred to as the reference axis (30), of height 2H with respect to the interior surface (14) of the base (11), and of diameter 2R, the retaining device (19) for the clamping system that clamps the retaining wall is situated at a radial distance greater than or equal to R away from the reference axis (30) and at a vertical distance greater than or equal to H away from the interior surface (14) of the base (11).

11. Securing device (10) according to any one of the preceding claims, in which the retaining device (19) for the clamping system that clamps the retaining wall comprises a cavity (25) able to house at least part of the clamping system (20) that clamps the retaining wall.

12. Securing device (10) according to Claim 11, in which the cavity (25) of the retaining device (19) for the clamping system that clamps the retaining wall has a cross section that accommodates at least 40% of the cross section of the clamping system (20).

13. Securing device (10) according to any one of the preceding claims, in which, with a rim bordering the opening (18) of the base (11) extending inwardly to create a narrowing for the purposes of retaining the electronic member in the closed volume (13) and a spacing defining a space E between the electronic member and the wall of the tyre casing, the distance E is greater than or equal to 2 millimetres and less than or equal to 4 millimetres.

14. Securing device (10) according to any one of the preceding claims, in which the base (11) comprises at least one marker (24) situated on the vertically upper part of the said base (11).

15. Securing device (10) according to any one of the preceding claims, in which, with the fault being formed and defining a lip on each disjointed structure of the retaining wall (12), the securing device (10) comprises a single-use clamping system (20) able to bring together the lips of the fault at least at the retaining device (19).

16. Securing device (10) according to Claim 15, in which the single-use clamping system (20) that clamps the retaining wall comprises a tightenable ring.
